# EUROPEAN PATENT APPLICATION

(11) **EP 4 187 473 A1**
(43) Date of publication of application: **31.05.2023**
(21) Application number: 22206981.7
(22) Date of filing: 11.11.2022
(51) Int. Cl.: G06Q 30/0601

(54) **SHOE PURCHASE RECOMMENDATION DEVICE**

(30) Priority: 25.11.2021 JP 2021190748
(71) Applicant: ASICS Corporation, Kobe-shi Hyogo 650-8555 (JP)
(72) Inventor: Shiina, Ippei, Hyogo, 650-8555 (JP); Sugimori, Chihiro, Hyogo, 650-8555 (JP); Nakaya, Mai, Hyogo, 650-8555 (JP); Kusano, Ken, Hyogo, 650-8555 (JP)
(74) Representative: Marks & Clerk LLP

(57) **Abstract**

A shoe purchase recommendation device (10A) includes: a user data storage unit (11) that stores user data (111); a foot size change prediction unit (12) that calculates a change prediction value of a foot size of the user on the basis of the user data (111); a product information storage unit (13) that stores product information (131); a purchase recommendation processing unit (14) that determines a purchase-recommended date and a purchase-recommended product of shoes on the basis of the change prediction value and the product information (131); and a screen display processing unit (16) that performs processing of displaying, on a display unit (21), a foot size change diagram based on a foot size measurement value (111B) or the change prediction value from a past time point to the present and the change prediction value in a period from the present to a future time point, and a comparison value diagram indicating a comparison value (151) of the foot size from the past time point to the future time point.

## Description

### CROSS-REFERENCE TO RELATED APPLICATIONS

The present application claims priority to and incorporates by reference the entire contents of Japanese Patent Application No. 2021-190748 filed in Japan on November 25, 2021.

### BACKGROUND OF THE INVENTION

### 1. Field of the Invention

The present invention relates to a shoe purchase recommendation device that predicts a change in a foot size of a prediction target person and recommends purchase of shoes.

### 2. Description of the Related Art

It is desired to wear shoes having an appropriate volume suited to the foot size of a wearer, such as a foot length, a foot circumference, and an arch height, and wearing shoes having an inappropriate volume may cause hallux valgus or may cause a shoe blister. In particular, when the wearer is a child, wearing shoes having an inappropriate volume sometimes adversely affect the growth of the foot.

Since the foot size changes with growth and aging, even a shoe having an optimum volume for the current foot size will not have an optimum volume for the foot size in the future in some cases.

WO 2021/130889 A discloses an invention that predicts a change in a foot length and notifies a customer of a replacement purchase of shoes.

In general, when deciding whether or not to purchase shoes, not only the own foot size of the user but also information such as whether the foot size of the user is larger or smaller than the foot size of another person may serve as one of the decision materials. However, the invention disclosed in WO 2021/130889 A has not been sufficient to visually provide a shoe purchase-recommended date and a criterions to decide as to whether or not to make a purchase.

The present invention has been made in view of the above, and an object of the present invention is to obtain a shoe purchase recommendation device capable of allowing a user to utilize information on a foot size of another person as a criterion to decide as to whether or not to purchase shoes.

### SUMMARY OF THE INVENTION

In order to solve the above-described problem and achieve the object, a shoe purchase recommendation device according to the present invention includes a user data storage unit that stores user data including at least an age and a foot size measurement value of a user; a foot size change prediction unit that calculates a change prediction value of a foot size of the user on a basis of the user data; a product information storage unit that stores product information including a shoe size; a purchase recommendation processing unit that determines a purchase-recommended date and a purchase-recommended product of shoes on a basis of the change prediction value and the product information; and a screen display processing unit that performs processing of displaying, on a display unit, a foot size change diagram based on the foot size measurement value or the change prediction value from a past time point to present and the change prediction value in a period from the present to a future time point, and a comparison value diagram indicating a comparison value of the foot size from the past time point to the future time point. The screen display processing unit displays the purchase-recommended date and the purchase-recommended product on the display unit together with the foot size change diagram and the comparison value diagram.

### BRIEF DESCRIPTION OF THE DRAWINGS

FIG. 1 is a diagram illustrating a configuration of a shoe purchase recommendation device according to a first embodiment of the present invention;
FIG. 2 is a diagram illustrating an example of a notification screen displayed on a display input device by a screen display processing unit of the shoe purchase recommendation device according to the first embodiment;
FIG. 3 is a flowchart illustrating a flow of action of the shoe purchase recommendation device according to the first embodiment;
FIG. 4 is a diagram illustrating a configuration of a shoe purchase recommendation device according to a second embodiment of the present invention;
FIG. 5 is a flowchart illustrating a flow of processing of the shoe purchase recommendation device according to the second embodiment to determine a purchase-recommended product;
FIG. 6 is a diagram illustrating a configuration of a shoe purchase recommendation device according to a third embodiment of the present invention;
FIG. 7 is a flowchart illustrating a flow of processing of the shoe purchase recommendation device according to the third embodiment to determine a purchase-recommended product;
FIG. 8 is a diagram illustrating a configuration of a shoe purchase recommendation device according to a fourth embodiment of the present invention;
FIG. 9 is a flowchart illustrating a flow of processing of the shoe purchase recommendation device according to the fourth embodiment to determine a purchase-recommended product;
FIG. 10 is a diagram illustrating a configuration of a shoe purchase recommendation device according to a fifth embodiment of the present invention;
FIG. 11 is a flowchart illustrating a flow of processing of the shoe purchase recommendation device according to the fifth embodiment to determine a purchase-recommended product;
FIG. 12 is a diagram illustrating a configuration of a shoe purchase recommendation device according to a sixth embodiment of the present invention;
FIG. 13 is a diagram illustrating a configuration of a shoe purchase recommendation device according to a seventh embodiment of the present invention; and
FIG. 14 is a diagram illustrating a hardware configuration example of the shoe purchase recommendation devices according to the first to seventh embodiments.

### DETAILED DESCRIPTION OF THE PREFERRED EMBODIMENTS

Hereinafter, embodiments of a shoe purchase recommendation device according to the present invention will be described in detail with reference to the drawings. Note that the present invention is not limited by these embodiments. In addition, in the embodiments to be described below, the same or common parts are denoted by the same reference signs, and the description thereof will not be repeated.

In the following description, a case where the foot size is the foot length will be taken as an example. However, the foot size only has to be dimensions of a measurable portion, such as a foot circumference and an arch height, and is not limited to dimensions of a specific portion. In addition, the foot size may be a combination of dimensions of different portions of the foot, such as the foot length, the foot circumference, and the arch height, or may be three-dimensional scan data of the user's foot. Furthermore, not only the whole size of the foot but also the dimensions of a part of the shoe corresponding to the foot length, the foot circumference, the arch height, or the like may be regarded as the foot size.

### (First Embodiment)

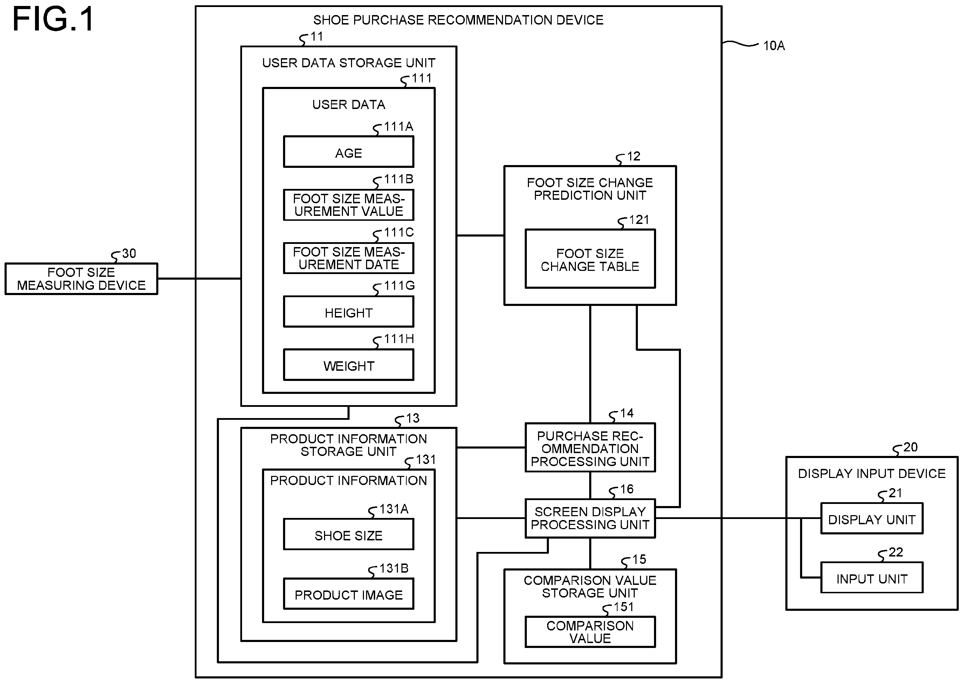

FIG. 1 is a diagram illustrating a configuration of a shoe purchase recommendation device according to a first embodiment of the present invention. A shoe purchase recommendation device 10A includes: a user data storage unit 11 that stores user data 111 including at least an age 111A, a foot size measurement value 111B, and a foot size measurement date 111C of a user; a foot size change prediction unit 12 that calculates a change prediction value of a foot size of the user on the basis of the user data 111; a product information storage unit 13 that stores product information 131 including a shoe size 131A and a product image 131B; a purchase recommendation processing unit 14 that determines a purchase-recommended date and a purchase-recommended product of shoes on the basis of the change prediction value and the product information 131; a comparison value storage unit 15 that stores a comparison value 151 for foot size comparison; and a screen display processing unit 16 that performs processing of displaying a foot size change diagram based on the foot size measurement value 111B or the change prediction value from a past time point to the present and the change prediction value in a period from the present to a future time point, and a comparison value diagram indicating the comparison value 151 of the foot size from the past time point to the future time point. The foot size measurement value 111B is a measurement value of the foot size of the user measured in the past. The foot size measurement date 111C is a date on which the foot size was measured in the past. As the comparison value 151, an average value of the foot sizes of the user at the age 111A can be used. However, as the comparison value 151, not only the average value but also data of the foot size when the user's parent or older brother was the same age as the user can be used. When the average value of the foot sizes is used as the comparison value 151, an average value of members who use the shoe purchase recommendation device 10A may be used, or a statistical average value including persons who do not use the shoe purchase recommendation device 10A may be used. The age 111A is data representing elapsed time from birth. The age 111A may be in "month old" representing the elapsed time from birth in units of months, instead of units of years.

The foot size change prediction unit 12 holds a foot size change table 121, which is statistical data of changes in the foot size, and calculates a change prediction value of the foot size by adding an average change amount of the foot size based on the age 111A to the foot size measurement value 111B. The foot size change prediction unit 12 can calculate not only the prediction value of the foot size at a future time point dependent on the current foot size measurement value 111B as a basis, but also the prediction value of the foot size at a past time point dependent on the past foot size measurement value 111B as a basis. Note that the foot size change prediction unit 12 may calculate the change prediction value of the foot size by adding the change amount of the foot size based on data of the foot size of an older family member of the user included in the user data 111 stored in the user data storage unit 11, to the foot size measurement value 111B.

In addition to the age 111A, the foot size measurement value 111B, and the foot size measurement date 111C, the user data 111 may include the height, weight, gender, residential region, current foot size data of the family member, and past foot size data of the family member. The foot size change prediction unit 12 calculates the change prediction value of the foot size using these pieces of information, whereby the change prediction value can be calculated by more accurately predicting the change in the foot size. In the shoe purchase recommendation device 10A according to the first embodiment, the user data 111 includes a height 111G and a weight 111H of the user. Therefore, by calculating the change prediction value of the foot size using the age 111A, the height 111G, and the weight 111H of the user and the foot size measurement value 111B at the time point of the input age, the foot size change prediction unit 12 can calculate the foot size prediction value in consideration of the physique of the user.

A display input device 20 including a display unit 21 and an input unit 22 is connected to the shoe purchase recommendation device 10A. A liquid crystal display or an organic electroluminescence display can be applied as the display unit 21, but a display device other than these displays may be adopted. Input devices such as a keyboard and a pointing device can be applied as the input unit 22, but an input device other than these input devices may be adopted. Note that a touch screen monitor having both of a display function and an input function together can also be applied as the display unit 21 and the input unit 22. The display input device 20 is connected to the shoe purchase recommendation device 10A via the Internet. Note that the display input device 20 may be directly connected to the shoe purchase recommendation device 10A not via the Internet. In addition, the shoe purchase recommendation device 10A may include the display unit 21 and the input unit 22. In this case, the display input device 20 does not have to be connected to the shoe purchase recommendation device 10A.

A foot size measuring device 30 is connected to the shoe purchase recommendation device 10A. The foot size measuring device 30 outputs the foot size measurement value 111B and the foot size measurement date 111C obtained by measuring the foot size of the user. The foot size measurement value 111B and the foot size measurement date 111C are accumulated in the user data storage unit 11. Note that the shoe purchase recommendation device 10A may be provided with a user interface for input such that the foot size measurement value 111B and the foot size measurement date 111C are input by operating the user interface. In addition, the shoe purchase recommendation device 10A may acquire the foot size measurement value 111B and the foot size measurement date 111C by communicating with another device that stores the foot size measurement value 111B and the foot size measurement date 111C. Furthermore, the foot size measurement date 111C does not have to be data separated from the foot size measurement value 111B and may be data of creation date and time or update date and time included in the file property of the foot size measurement value 111B.

To give an example, a server of a shoe manufacturer can be applied as the shoe purchase recommendation device 10A. In addition, a smartphone terminal of the user can be applied as the display input device 20. Furthermore, a three-dimensional foot last automatic measuring instrument or an information terminal such as a smartphone terminal and a tablet terminal of the user can be applied as the foot size measuring device 30.

The shoes are set with a foot size fitting range for each size. To give an example, for a certain shoe having a size of 20 cm, a foot length of 19.15 cm to 19.56 cm is set as the foot size fitting range. Accordingly, the day on which the foot length of the user reaches 19.15 cm is the purchase-recommended date on which the purchase of the shoes having a size of 20 cm is recommended. In this manner, the purchase recommendation processing unit 14 determines the day on which the change prediction value of the foot size of the user reaches the foot size fitting range of shoes that are the purchase-recommended product, as the purchase-recommended date.

The screen display processing unit 16 sets the day on which a preset period elapses from the previous foot size measurement date 111C, as the measurement-recommended date.

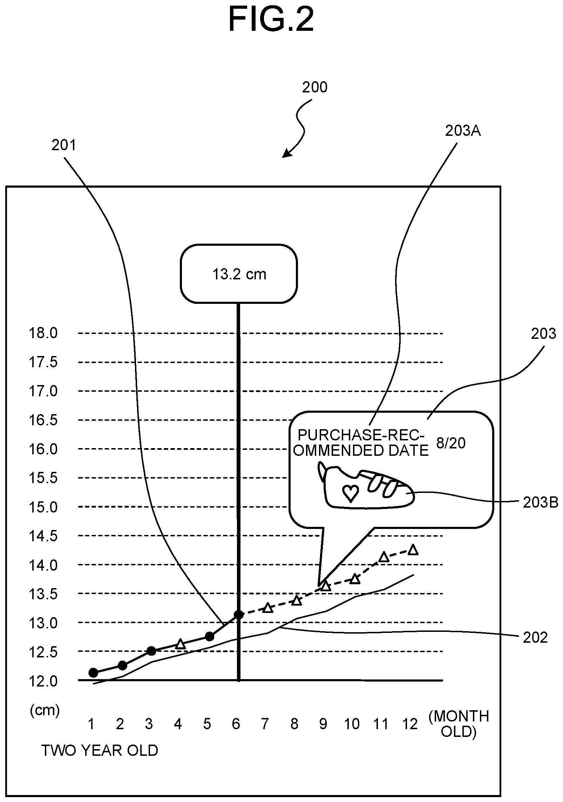

FIG. 2 is a diagram illustrating an example of a notification screen displayed on the display input device by the screen display processing unit of the shoe purchase recommendation device according to the first embodiment. A notification screen 200 contains a foot size change diagram 201, a comparison value diagram 202, and a purchase recommendation balloon 203. A purchase-recommended date 203A and a purchase-recommended product image 203B are displayed inside the purchase recommendation balloon 203. The processing of displaying the notification screen 200 containing the foot size change diagram 201 and the comparison value diagram 202 on the display unit 21 is performed by the screen display processing unit 16.

The shoe purchase recommendation device 10A according to the first embodiment represents the foot size change diagram 201 and the comparison value diagram 202 as line graphs including plots and lines connecting the plots on a plane with the magnitude of the foot size as a vertical axis and the time as a horizontal axis, but may display the foot size change diagram 201 and the comparison value diagram 202 by another method.

In the foot size change diagram 201, the foot size measurement value 111B is represented by a black circle plot, and the foot size change prediction value is represented by a white triangle plot. In addition, the past scheduled measurement date on which the foot size was not measured is plotted by replacing the foot size measurement value 111B on that scheduled measurement date with the foot size change prediction value. Accordingly, the user is allowed to know the scheduled measurement date when the foot size was not measured, by visually recognizing the foot size change diagram 201. In addition, among the lines connecting the plots, the lines connecting the past foot size measurement values 111B or the foot size change prediction values are represented by solid lines, and the lines connecting the future foot size change prediction values are represented by broken lines. Note that it is sufficient that the prediction value and the measurement value can be distinguished from each other, and the line types are not limited to the exemplified line types.

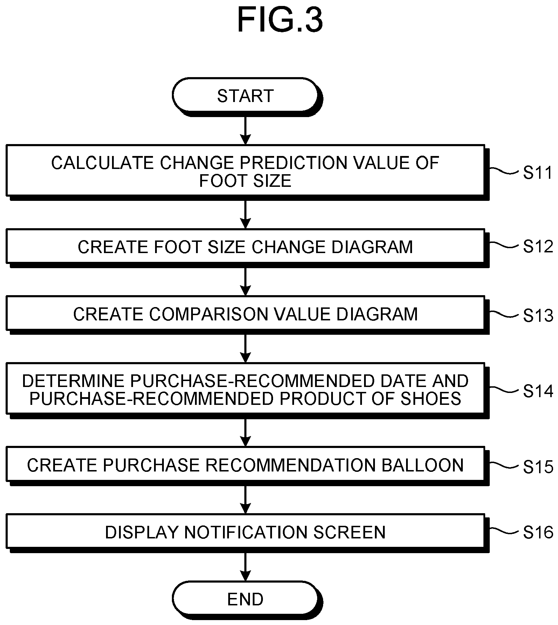

FIG. 3 is a flowchart illustrating a flow of action of the shoe purchase recommendation device according to the first embodiment. In step S11, the foot size change prediction unit 12 calculates the change prediction value of the foot size of the user on the basis of the user data 111 stored in the user data storage unit 11. In step S12, the screen display processing unit 16 creates the foot size change diagram 201. In step S13, the screen display processing unit 16 reads the comparison value 151 from the comparison value storage unit 15 and creates the comparison value diagram 202. In step S14, the purchase recommendation processing unit 14 determines the purchase-recommended date and the purchase-recommended product of shoes on the basis of the change prediction value calculated by the foot size change prediction unit 12 and the product information 131 stored in the product information storage unit 13.

In step S15, the screen display processing unit 16 reads the product image 131B of the purchase-recommended product from the product information storage unit 13 and creates the purchase recommendation balloon 203. In step S16, the screen display processing unit 16 performs processing of displaying the notification screen 200.

By displaying the purchase recommendation balloon 203 containing the purchase-recommended date 203A and the purchase-recommended product image 203B on the notification screen 200, the shoe purchase recommendation device 10A according to the first embodiment can urge the purchase of shoes at an appropriate timing when the foot size of the user rises to the foot size fitting range of the shoes. In addition, since the shoe purchase recommendation device 10A displays the purchase recommendation balloon 203 with the foot size change diagram 201 and the comparison value diagram 202 on the notification screen 200, the user is allowed to decide whether or not to purchase shoes, by utilizing information on the foot size based on the statistical data or the data of the foot size of the parent or brother, as a criterion to decide.

### (Second Embodiment)

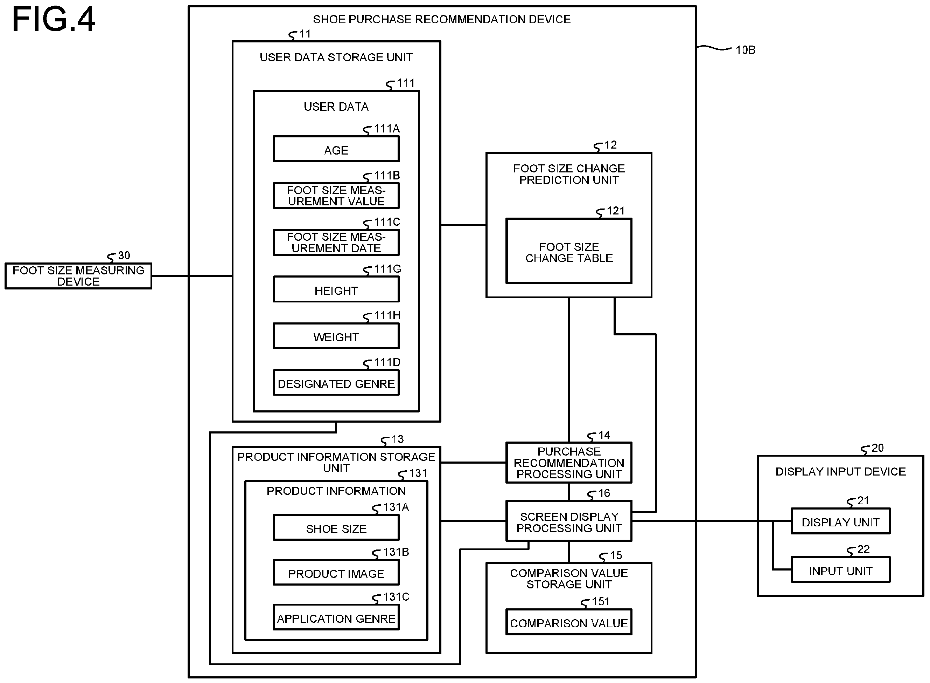

FIG. 4 is a diagram illustrating a configuration of a shoe purchase recommendation device according to a second embodiment of the present invention. A shoe purchase recommendation device 10B according to the second embodiment is different from the shoe purchase recommendation device 10A according to the first embodiment in that a designated genre 111D, which is a sports genre designated by a user, is included in user data 111, and an application genre 131C, which is a sports genre in which the shoes are used, is included in product information 131.

When there are shoes of which the application genre 131C matches the designated genre 111D among candidates for the purchase-recommended product selected on the basis of the change prediction value of the foot size, a purchase recommendation processing unit 14 determines the purchase-recommended product by prioritizing the shoes of which the application genre 131C matches the designated genre 111D.

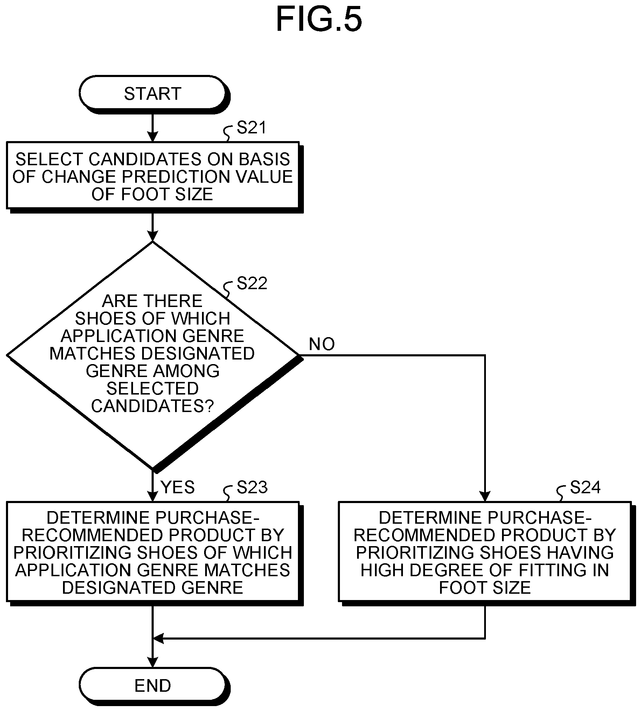

FIG. 5 is a flowchart illustrating a flow of processing of the shoe purchase recommendation device according to the second embodiment to determine the purchase-recommended product. In step S21, the purchase recommendation processing unit 14 selects candidates for the shoes recommended to purchase on the basis of the change prediction value of the foot size. In step S22, the purchase recommendation processing unit 14 verifies whether or not there are shoes of which the application genre 131C matches the designated genre 111D among the selected candidates. When there are shoes of which the application genre 131C matches the designated genre 111D, Yes is taken in step S22, and the processing proceeds to step S23. When there are no shoes of which the application genre 131C matches the designated genre 111D, No is taken in step S22, and the processing proceeds to step S24.

In step S23, the purchase recommendation processing unit 14 determines the purchase-recommended product from among the candidates selected in step S21, by prioritizing the shoes of which the application genre 131C matches the designated genre 111D.

In step S24, the purchase recommendation processing unit 14 determines the purchase-recommended product from among the candidates selected in step S21, by prioritizing shoes having a high degree of fitting in the foot size. Note that it is assumed that the shoes of which a median value of the foot size fitting range is closer to the foot size prediction value has a higher degree of fitting in the foot size.

The shoe purchase recommendation device 10B according to the second embodiment can determine the purchase-recommended product by prioritizing shoes suitable for the genre designated in advance by the user, from among the shoes fitting to the change prediction value of the foot size of the user, and thus can recommend the purchase of the shoes suited to the preference of the user.

Note that approximate genres may be set in advance for sports genres that can be designated as the designated genre 111D such that, when there are no shoes of which the application genre 131C matches the designated genre 111D, a product to be purchased is determined by prioritizing the shoes for the approximate genre. For example, competition groups such as an indoor court category including basketball, volleyball, and badminton, an outdoor limited contact category including soccer, rugby, and baseball, and an outdoor non-contact category including tennis, lacrosse, and track and field events may be set such that, when there are no shoes of which the application genre 131C matches the designated genre 111D among the candidates for the purchase-recommended product, the purchase recommendation processing unit 14 determines the purchase-recommended product by prioritizing the shoes for a competition belonging to the competition group including the designated genre 111D. Note that the case where "there are no shoes of which the application genre matches the designated genre" includes both of a case where the commodity itself does not exist and a case where the commodity exists but there is no stock.

### (Third Embodiment)

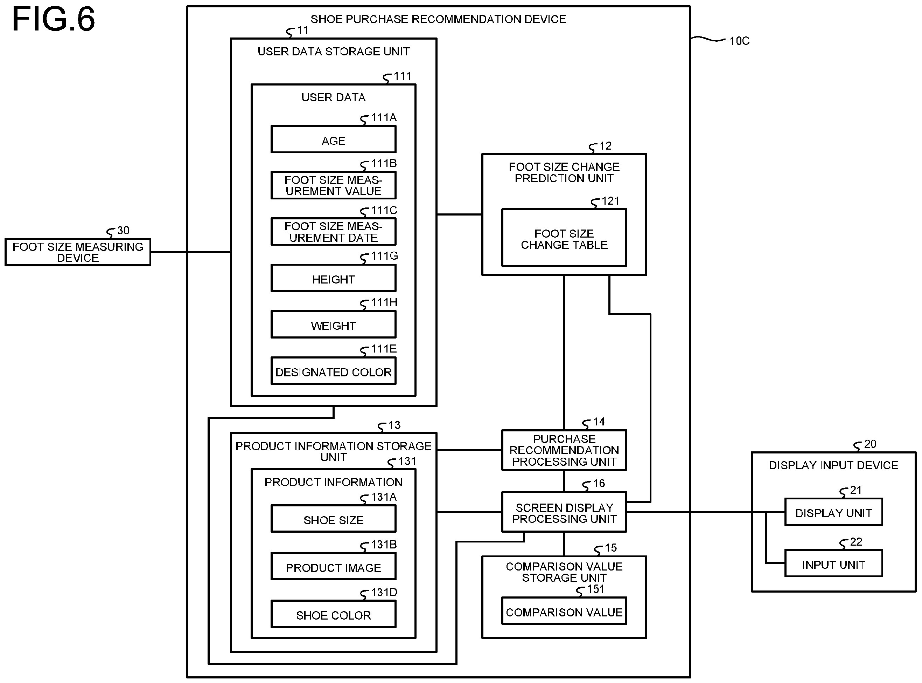

FIG. 6 is a diagram illustrating a configuration of a shoe purchase recommendation device according to a third embodiment of the present invention. A shoe purchase recommendation device 10C according to the third embodiment is different from the shoe purchase recommendation device 10A according to the first embodiment in that a designated color 111E, which is a color designated by a user, is included in user data 111, and a shoe color 131D, which is information on the color of the shoes, is included in product information 131. The shoe color 131D is not limited to the color of a region occupying a large proportion on the outer surface of the shoe and may be a color of a logo mark provided on the outer surface of the shoe, or may be a color of a conspicuous part although occupying a small proportion on the outer surface of the shoe.

When there are shoes of which the shoe color 131D matches the designated color 111E among the candidates for the purchase-recommended product selected on the basis of the change prediction value of the foot size, a purchase recommendation processing unit 14 determines the purchase-recommended product by prioritizing the shoes of which the shoe color 131D matches the designated color 111E.

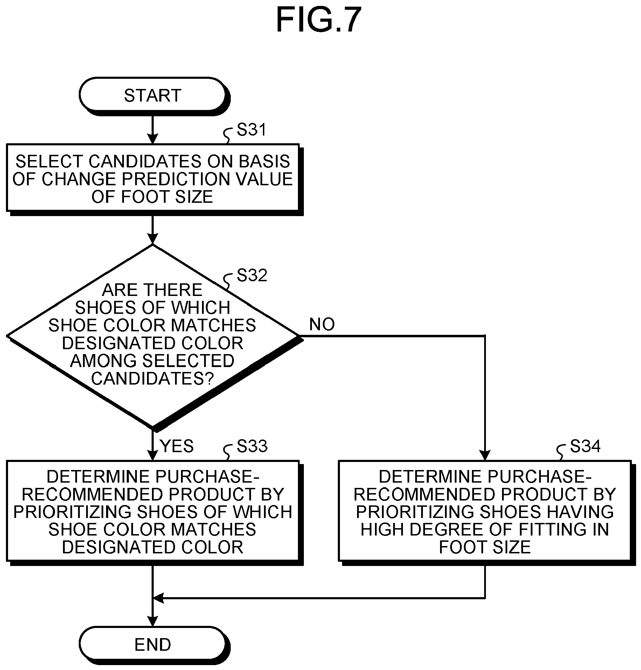

FIG. 7 is a flowchart illustrating a flow of processing of the shoe purchase recommendation device according to the third embodiment to determine the purchase-recommended product. In step S31, the purchase recommendation processing unit 14 selects candidates for the shoes recommended to purchase on the basis of the change prediction value of the foot size. In step S32, the purchase recommendation processing unit 14 verifies whether or not there are shoes of which the shoe color 131D matches the designated color 111E among the selected candidates. When there are shoes of which the shoe color 131D matches the designated color 111E, Yes is taken in step S32, and the processing proceeds to step S33. When there are no shoes of which the shoe color 131D matches the designated color 111E, No is taken in step S32, and the processing proceeds to step S34.

In step S33, the purchase recommendation processing unit 14 determines the purchase-recommended product from among the candidates selected in step S31, by prioritizing the shoes of which the shoe color 131D matches the designated color 111E.

In step S34, the purchase recommendation processing unit 14 determines the purchase-recommended product from among the candidates selected in step S31, by prioritizing shoes having a high degree of fitting in the foot size. Note that it is assumed that the shoes of which a median value of the foot size fitting range is closer to the foot size prediction value has a higher degree of fitting in the foot size.

The shoe purchase recommendation device 10C according to the third embodiment can determine the purchase-recommended product by prioritizing the shoes of the color designated in advance by the user, from among the shoes fitting to the change prediction value of the foot size of the user, and thus can recommend the purchase of the shoes suited to the preference of the user.

Note that approximate colors may be set in advance for colors that can be designated as the designated color 111E such that, when there are no shoes of which the shoe color 131D matches the designated color 111E, a product to be purchased is determined by prioritizing the shoes of the approximate color. For example, color groups such as a monotone category including black, white, and gray, a warm color category including red, pink, and brown, a cool color category including blue, purple, and green, and a light color category including orange, yellow, and gold may be set in advance such that, when there are no shoes of which the shoe color 131D matches the designated color 111E among the candidates for the purchase-recommended product, the purchase recommendation processing unit 14 determines the purchase-recommended product by prioritizing the shoes of a color belonging to the color group including the designated color 111E. Note that the case where "there are no shoes of which the shoe color matches the designated color" includes both of a case where the commodity itself does not exist and a case where the commodity exists but there is no stock.

### (Fourth Embodiment)

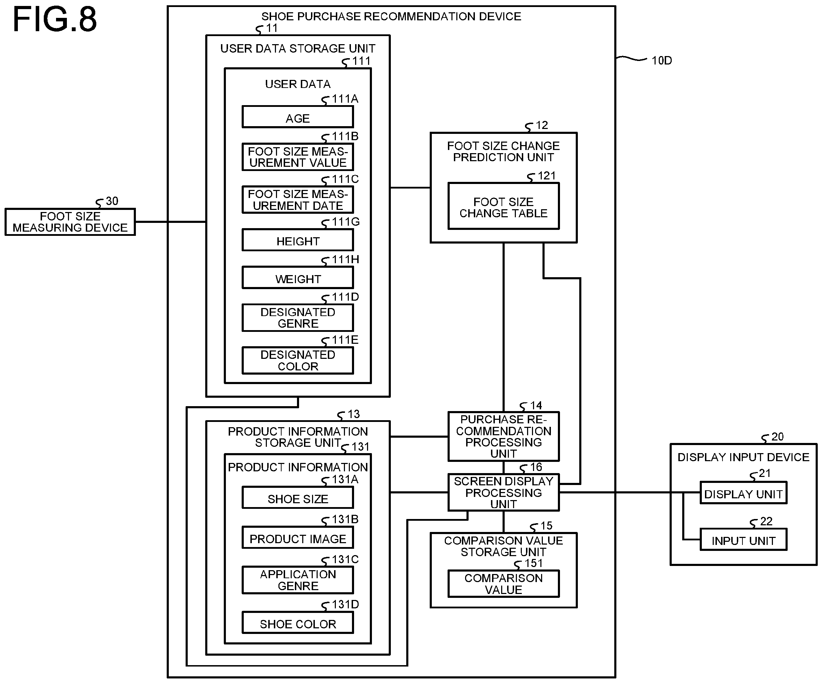

FIG. 8 is a diagram illustrating a configuration of a shoe purchase recommendation device according to a fourth embodiment of the present invention. A shoe purchase recommendation device 10D according to the fourth embodiment is different from the shoe purchase recommendation device 10A according to the first embodiment in that a designated genre 111D, which is a sports genre designated by a user, and a designated color 111E, which is a color designated by the user, are included in user data 111, and an application genre 131C, which is a sports genre in which the shoes are used, and a shoe color 131D, which is information on the color of the shoes, are included in product information 131.

A purchase recommendation processing unit 14 selects a purchase-recommended candidate collection of which the application genre 131C matches the designated genre 111D from among candidates for the purchase-recommended product selected on the basis of the change prediction value of the foot size, and determines the purchase-recommended product by prioritizing the shoes of which the shoe color 131D matches the designated color 111E from the purchase-recommended candidate collection.

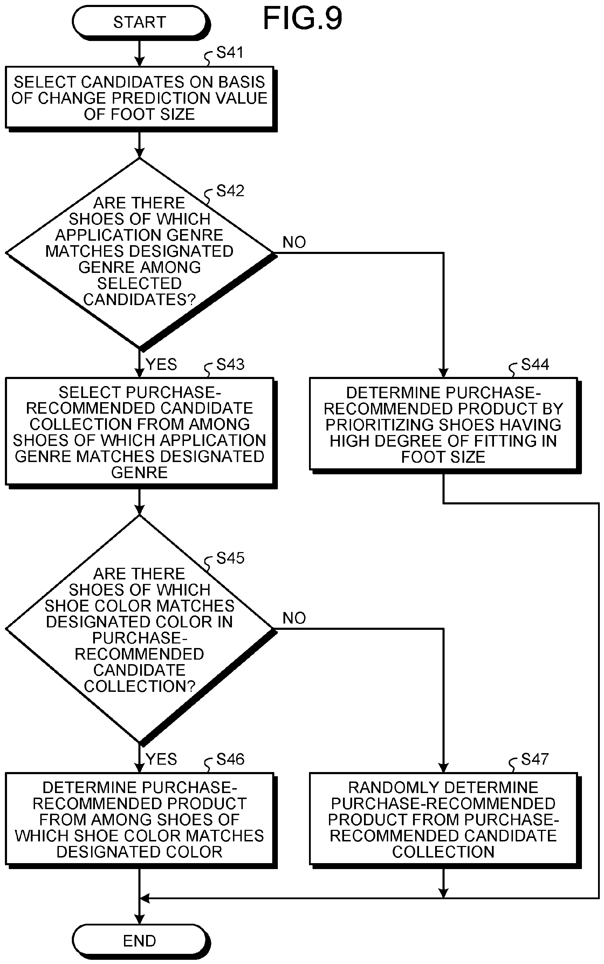

FIG. 9 is a flowchart illustrating a flow of processing of the shoe purchase recommendation device according to the fourth embodiment to determine the purchase-recommended product. In step S41, the purchase recommendation processing unit 14 selects candidates for the shoes recommended to purchase on the basis of the change prediction value of the foot size. In step S42, the purchase recommendation processing unit 14 verifies whether or not there are shoes of which the application genre 131C matches the designated genre 111D among the selected candidates. When there are shoes of which the application genre 131C matches the designated genre 111D, Yes is taken in step S42, and the processing proceeds to step S43. When there are no shoes of which the application genre 131C matches the designated genre 111D, No is taken in step S42, and the processing proceeds to step S44.

In step S43, the purchase recommendation processing unit 14 selects the purchase-recommended candidate collection from among the shoes of which the application genre 131C matches the designated genre 111D among the candidates selected in step S41.

In step S44, the purchase recommendation processing unit 14 determines the purchase-recommended product from among the candidates selected in step S41, by prioritizing shoes having a high degree of fitting in the foot size. Note that it is assumed that the shoes of which a median value of the foot size fitting range is closer to the foot size prediction value has a higher degree of fitting in the foot size. After step S44, the processing ends.

In step S45, the purchase recommendation processing unit 14 verifies whether or not there are shoes of which the shoe color 131D matches the designated color 111E in the purchase-recommended candidate collection. When there are shoes of which the shoe color 131D matches the designated color 111E, Yes is taken in step S45, and the processing proceeds to step S46. When there are no shoes of which the shoe color 131D matches the designated color 111E, No is taken in step S45, and the processing proceeds to step S47.

In step S46, the purchase recommendation processing unit 14 determines the purchase-recommended product from among the shoes of which the shoe color 131D matches the designated color 111E in the purchase-recommended candidate collection selected in step S43.

In step S47, the purchase recommendation processing unit 14 randomly determines the purchase-recommended product from the purchase-recommended candidate collection.

The shoe purchase recommendation device 10D according to the fourth embodiment determines the shoes of which the shoe color 131D matches the designated color 111E from the purchase-recommended candidate collection, of which the application genre 131C matches the designated genre 111D, as the purchase-recommended product, and thus can recommend the purchase of the shoes that meet the conditions designated by the user.

### (Fifth Embodiment)

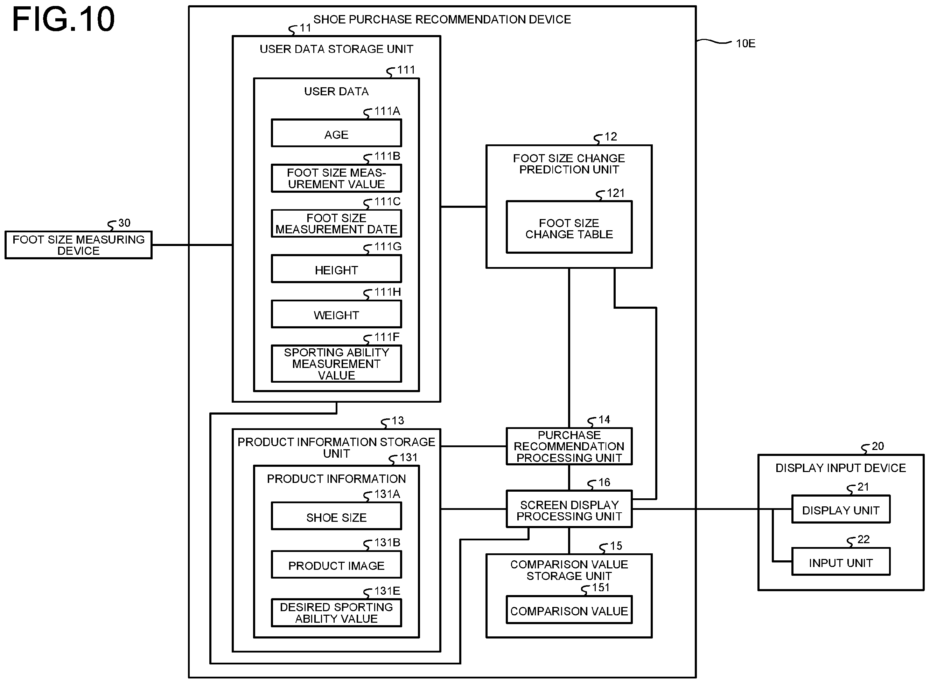

FIG. 10 is a diagram illustrating a configuration of a shoe purchase recommendation device according to a fifth embodiment of the present invention. A shoe purchase recommendation device 10E according to the fifth embodiment is different from the shoe purchase recommendation device 10A according to the first embodiment in that a sporting ability measurement value 111F, which is a measurement result for the sporting ability of a user, is included in user data 111, and a desired sporting ability value 131E, which is information on the sporting ability coupled with the shoes, is included in product information 131.

Examples of the sporting ability include, but are not limited to, the time of short-distance running, the time of long-distance running, the height of vertical jump, and the number of times of repeated side stepping. The desired sporting ability value 131E indicates the sporting ability desired to draw out the original potential of the shoes, and when the sporting ability measurement value 111F of the wearer of the shoes is equal to or less than the desired sporting ability value 131E, the original potential of the shoes will not be allowed to be drawn out.

When there are shoes of which the desired sporting ability value 131E is equal to or less than the sporting ability measurement value 111F among the candidates for the purchase-recommended product selected on the basis of the change prediction value of the foot size, a purchase recommendation processing unit 14 determines the purchase-recommended product by prioritizing the shoes of which the desired sporting ability value 131E is equal to or less than the sporting ability measurement value 111F.

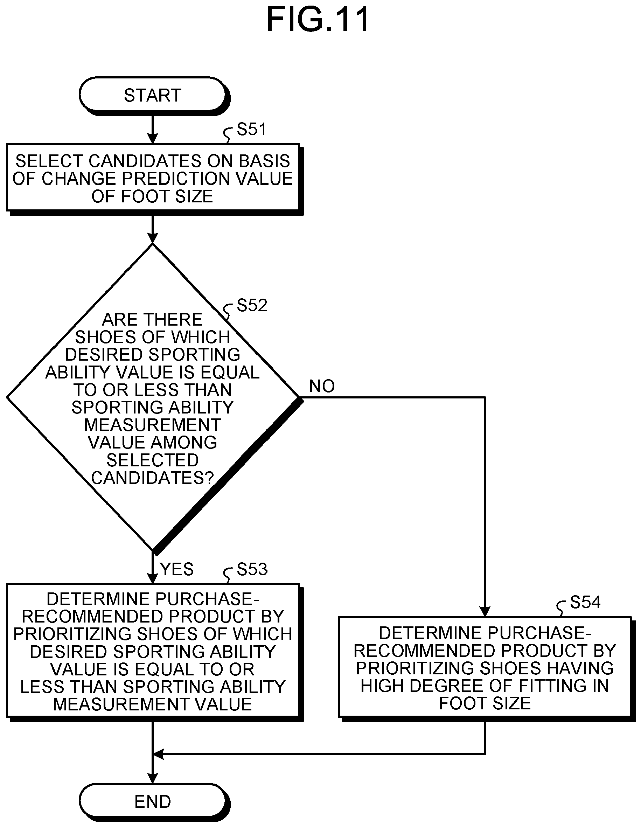

FIG. 11 is a flowchart illustrating a flow of processing of the shoe purchase recommendation device according to the fifth embodiment to determine the purchase-recommended product. In step S51, the purchase recommendation processing unit 14 selects candidates for the shoes recommended to purchase on the basis of the change prediction value of the foot size. In step S52, the purchase recommendation processing unit 14 verifies whether or not there are shoes of which the desired sporting ability value 131E is equal to or less than the sporting ability measurement value 111F among the selected candidates. When there are shoes of which the desired sporting ability value 131E is equal to or less than the sporting ability measurement value 111F, Yes is taken in step S52, and the processing proceeds to step S53. When there are no shoes of which the desired sporting ability value 131E is equal to or less than the sporting ability measurement value 111F, No is taken in step S52, and the processing proceeds to step S54.

In step S53, the purchase recommendation processing unit 14 determines the purchase-recommended product from among the candidates selected in step S51, by prioritizing the shoes of which the desired sporting ability value 131E is equal to or less than the sporting ability measurement value 111F.

In step S54, the purchase recommendation processing unit 14 determines the purchase-recommended product from among the candidates selected in step S51, by prioritizing shoes having a high degree of fitting in the foot size. Note that it is assumed that the shoes of which a median value of the foot size fitting range is closer to the foot size prediction value has a higher degree of fitting in the foot size.

In particular, in sports shoes, a plurality of models is sometimes provided by performance of the wearer. In general, a model for beginners has specifications that give more importance on ease of handling than potential, whereas a model for advanced-level persons has specifications that give more importance on potential than ease of handling. Accordingly, if a person with low sporting ability wears a model for advanced-level persons, the original potential of the shoes will not be allowed to be sufficiently drawn out, and as a result, the wearer will not be able to sufficiently exhibit the own performance of the wearer. In addition, if a person with high sporting ability wears a model for beginners, the wearer will not be able to sufficiently exhibit the own performance of the wearer because the wearer is restricted by the potential of the shoes. By determining shoes recommended to purchase on the basis of the sporting ability of the user, the shoe purchase recommendation device 10E according to the fifth embodiment can recommend the purchase of the shoes that allow the user to easily exhibit performance.

### (Sixth Embodiment)

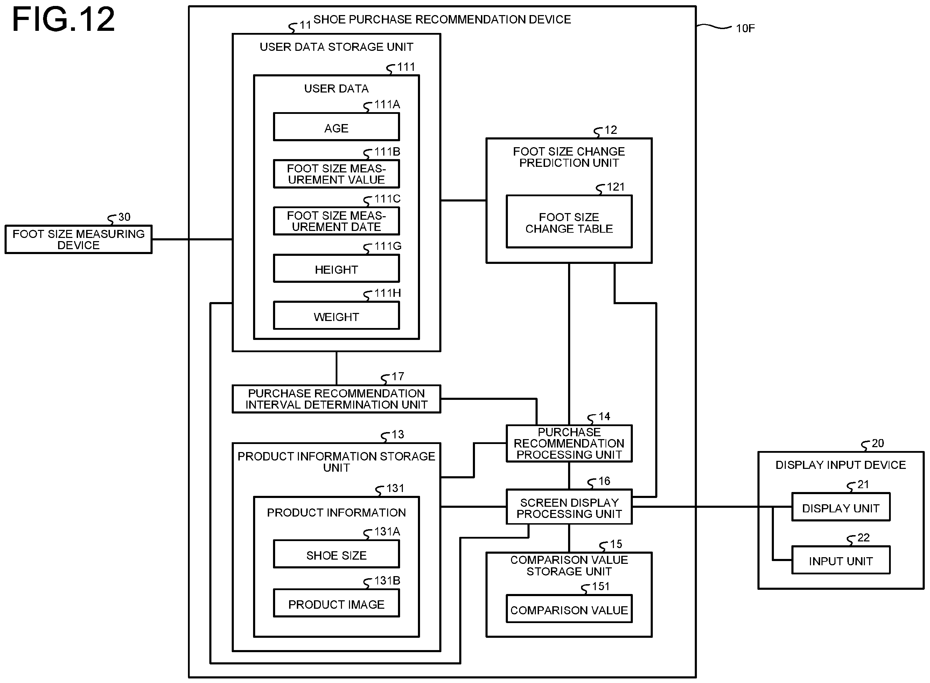

FIG. 12 is a diagram illustrating a configuration of a shoe purchase recommendation device according to a sixth embodiment of the present invention. A shoe purchase recommendation device 10F according to the sixth embodiment is different from the shoe purchase recommendation device 10A according to the first embodiment in including a purchase recommendation interval determination unit 17 that determines a purchase recommendation interval on the basis of an age 111A of the user.

When the purchase-recommended date based on the change prediction value and product information 131 has not been set until the purchase recommendation interval has elapsed from the previous purchase-recommended date, a purchase recommendation processing unit 14 sets the day on which the purchase recommendation interval elapses, as the purchase-recommended date.

Since, for example, the sole of the shoe is worn out as the shoe is used, it is preferable even for a user at an age with little change in the foot size to periodically purchase shoes for replacement. Even when the purchase-recommended date based on the change prediction value and the product information 131 has not been set until the purchase recommendation interval determined on the basis of the age 111A of the user has elapsed from the previous purchase-recommended date, the shoe purchase recommendation device 10F according to the sixth embodiment sets the day on which the purchase recommendation interval elapses, as the purchase-recommended date, and thus can recommend the purchase of shoes at an appropriate timing even for the user at an age with little change in the foot size. Meanwhile, when a child whose foot size changes in a short period of time, particularly a child in a growth period, is the user, the purchase of shoes at an appropriate timing can be recommended because the purchase-recommended date is set on the basis of the change prediction value of the foot size and the product information 131.

### (Seventh Embodiment)

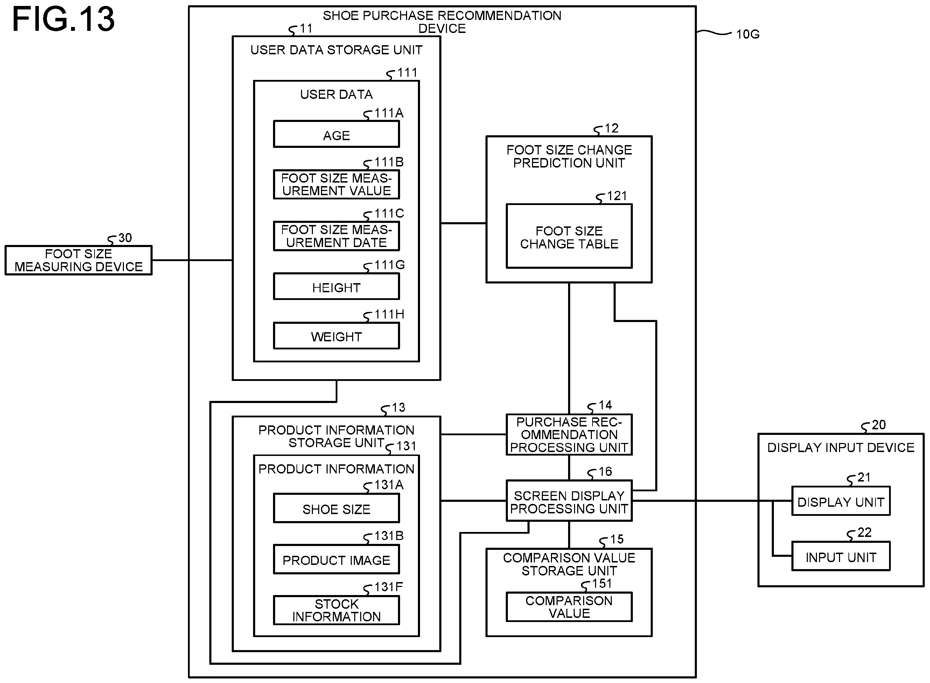

FIG. 13 is a diagram illustrating a configuration of a shoe purchase recommendation device according to a seventh embodiment of the present invention. A shoe purchase recommendation device 10G according to the seventh embodiment is different from the shoe purchase recommendation device 10A according to the first embodiment in that stock information 131F indicating whether or not the shoes are in stock is included in product information 131.

In the shoe purchase recommendation device 10G according to the seventh embodiment, after selecting candidates for the purchase-recommended product on the basis of the foot size change prediction value and the product information 131, a purchase recommendation processing unit 14 confirms the presence or absence of stock on the basis of the stock information 131F and determines the purchase-recommended product from among the shoes in stock.

Since the purchase-recommended product is determined from among the shoes in stock, the shoe purchase recommendation device 10G according to the seventh embodiment can avoid the occurrence of a situation in which the shoes recommended to purchase are out of stock and the user is not allowed to purchase the shoes recommended to purchase.

The shoe purchase recommendation devices 10A, 10B, 10C, 10D, 10E, 10F, and 10G according to each of the above embodiments are preferred when a child whose foot size changes in a short period of time is a user, but can also recommend an adult user to purchase shoes at an appropriate timing.

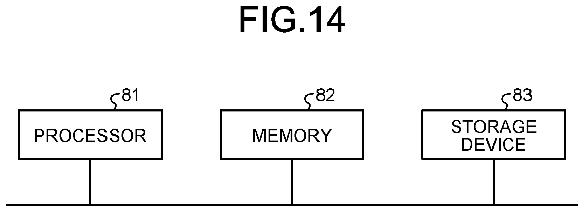

Next, a hardware configuration of the shoe purchase recommendation devices 10A, 10B, 10C, 10D, 10E, 10F, and 10G according to each of the above embodiments will be described. FIG. 14 is a diagram illustrating a hardware configuration example of the shoe purchase recommendation devices according to the first to seventh embodiments. FIG. 14 illustrates a hardware configuration in a case where the functions of the shoe purchase recommendation devices 10A, 10B, 10C, 10D, 10E, 10F, and 10G are implemented by using hardware that executes a program.

The shoe purchase recommendation devices 10A, 10B, 10C, 10D, 10E, 10F, and 10G include a processor 81 that executes various sorts of processing, a memory 82 that is a built-in memory, and a storage device 83 that stores information. The processor 81 reads the program stored in the storage device 83 into the memory 82 and executes the read program. The user data storage unit 11 and the product information storage unit 13 are implemented by the storage device 83.

As described above, the shoe purchase recommendation devices 10A, 10B, 10C, 10D, 10E, 10F, and 10G according to the present invention include: the user data storage unit 11 that stores the user data 111 including at least the age 111A and the foot size measurement value 111B of a user; the foot size change prediction unit 12 that calculates the change prediction value of the foot size of the user on the basis of the user data 111; the product information storage unit 13 that stores the product information 131 including the shoe size 131A; the purchase recommendation processing unit 14 that determines the purchase-recommended date and the purchase-recommended product of shoes on the basis of the change prediction value and the product information 131; and the screen display processing unit 16 that performs processing of displaying, on the display unit 21, the foot size change diagram 201 based on the foot size measurement value or the change prediction value from a past time point to the present and the change prediction value in a period from the present to a future time point, and the comparison value diagram 202 indicating the comparison value of the foot size from the past time point to the future time point, in which the screen display processing unit 16 displays the purchase-recommended date and the purchase-recommended product on the display unit 21 together with the foot size change diagram 201 and the comparison value diagram 202. Accordingly, the user of the shoe purchase recommendation devices 10A, 10B, 10C, 10D, 10E, 10F, and 10G according to the present invention can utilize information on the foot size of another person as a decision material as to whether or not the user purchases shoes.

In addition, the screen display processing unit 16 represents the foot size change diagram 201 and the comparison value diagram 202 as plots on a plane with the magnitude of the foot size as a vertical axis and the time as a horizontal axis, whereby the measurement values and the prediction values of the own foot size of the user can be directly compared with the comparison values in time series.

The screen display processing unit 16 represents the foot size measurement value and the change prediction value in the foot size change diagram 201 as different types of plots, whereby the user is allowed to directly distinguish between whether the foot size at a certain time point is an actual measurement value actually measured or a prediction value calculated on the basis of growth prediction.

In addition, the purchase recommendation interval determination unit 17 that determines the purchase recommendation interval on the basis of the age of the user is included, and when the purchase-recommended date based on the change prediction value and the product information has not been set until the purchase recommendation interval has elapsed from the previous purchase-recommended date, the purchase recommendation processing unit 14 sets the day on which the purchase recommendation interval elapses, as the purchase-recommended date, whereby the purchase of shoes can be recommended at an appropriate timing even for the user at an age with a small change in the foot size.

In addition, when the foot size was not measured on the measurement-recommended date set at a predetermined interval, on which the measurement of the foot size is recommended, the screen display processing unit 16 creates the foot size change diagram 201 by replacing the foot size measurement value on the measurement-recommended date on which the foot size was not measured, with the change prediction value, whereby the foot size change diagram 201 having a small difference from a case where the measurement is performed can be created even when the user did not measure the foot size.

In addition, the designated color 111E designated by the user is included in the user data 111, the shoe color 131D is included in the product information 131, and the purchase recommendation processing unit 14 determines the purchase-recommended product by prioritizing the shoes of the shoe color 131D matching the designated color 111E, from among the shoes fitting to the change prediction value, whereby the purchase of the shoes of the color suited to the taste of the user can be recommended at an appropriate timing.

In addition, the designated genre 111D, which is a sports genre designated by the user, is included the user data 111, the application genre 131C, which is a sports genre in which the shoes are used, is included the product information 131, and the purchase recommendation processing unit 14 determines the purchase-recommended product by prioritizing the shoes of which the application genre 131C matches the designated genre 111D, from among the shoes fitting to the change prediction value, whereby the purchase of the shoes for use in the sports genre designated by the user can be recommended at an appropriate timing.

In addition, the designated genre 111D, which is a sports genre designated by the user, and the designated color 111E designated by the user are included the user data 111, the application genre 131C, which is a sport genre in which the shoes are used, and the shoe color 131D are included in the product information, and the purchase recommendation processing unit 14 selects the purchase-recommended candidate collection by prioritizing the shoes of which the application genre 131C matches the designated genre 111D, from among the shoes fitting to the change prediction value, and determines the purchase-recommended product by prioritizing the shoes of the shoe color 131D matching the designated color 111E from the purchase-recommended candidate collection, whereby the purchase of the shoes for the sports genre designated by the user and of the color suited to the taste of the user can be recommended at an appropriate timing.

In addition, when there are no shoes of the shoe color 131D matching the designated color 111E, the purchase recommendation processing unit 14 determines the purchase-recommended product by prioritizing the shoes of the predetermined approximate color associated with the designated color 111E, whereby it becomes easy for the user to purchase the shoes of a similar color even if the color does not completely match the color designated by the user.

In addition, when there are no shoes for the application genre 131C matching the designated genre 111D, the purchase recommendation processing unit 14 determines the purchase-recommended product by prioritizing the shoes for a predetermined similar genre, which is a sports genre similar to the designated genre 111D, whereby the purchase of the shoes for sports that are close in form of competition to the sports genre designated by the user can be recommend at an appropriate timing.

In addition, the sporting ability measurement value 111F, which is a measurement result for the sporting ability of the user, is included in the user data 111, information on the desired sporting ability value 131E indicating the sporting ability coupled with each pair of shoes is included in the product information, and the purchase recommendation processing unit 14 determines the purchase-recommended product by prioritizing the shoes of which the desired sporting ability value 131E is equal to or less than the sporting ability measurement value 111F, from among the shoes fitting to the change prediction value, whereby the purchase of the shoes suited to the sporting ability of the user can be recommended at an appropriate timing.

In addition, the stock information 131F indicating whether or not the shoes are in stock is included in the product information 131, and the purchase recommendation processing unit 14 determines the purchase-recommended product from among the shoes in stock, whereby the purchase of the shoes that are not out of stock can be recommended to the user.

A shoe purchase recommendation device according to the present invention has an effect of enabling to allow a user to utilize information on a foot size of another person as a criterion to decide as to whether or not to purchase shoes.

The configurations indicated in the above embodiments illustrate examples of the content of the present invention and can be combined with another known technique. A part of the configurations can be omitted or altered without departing from the gist of the present invention.

## Claims

1. A shoe purchase recommendation device (10A,10B,10C,10D,10E,10F,10G) comprising:
a user data storage unit (11) that stores user data (111) including at least an age (111A) and a foot size measurement value (111B) of a user;
a foot size change prediction unit (12) that calculates a change prediction value of a foot size of the user on a basis of the user data (111);
a product information storage unit (13) that stores product information (131) including a shoe size (131A);
a purchase recommendation processing unit (14) that determines a purchase-recommended date and a purchase-recommended product of shoes on a basis of the change prediction value and the product information (131); and
a screen display processing unit (16) that performs processing of displaying, on a display unit (21), a foot size change diagram (201) based on the foot size measurement value (111B) or the change prediction value from a past time point to present and the change prediction value in a period from the present to a future time point, and a comparison value diagram (202) indicating a comparison value of the foot size from the past time point to the future time point, wherein
the screen display processing unit (16) displays the purchase-recommended date and the purchase-recommended product on the display unit (21) together with the foot size change diagram (201) and the comparison value diagram (202) .

2. The shoe purchase recommendation device (10A,10B,10C,10D,10E,10F,10G) according to claim 1, wherein the screen display processing unit (16) represents the foot size change diagram (201) and the comparison value diagram (202) as plots on a plane with magnitude of the foot size as a vertical axis and time as a horizontal axis.

3. The shoe purchase recommendation device (10A,10B,10C,10D,10E,10F,10G) according to claim 2, wherein the screen display processing unit (16) represents the foot size measurement value (111B) and the change prediction value in the foot size change diagram (201) as different types of plots.

4. The shoe purchase recommendation device (10F) according to any one of claims 1 to 3, comprising
a purchase recommendation interval determination unit (17) that determines a purchase recommendation interval on a basis of the age (111A) of the user, wherein
when the purchase-recommended date based on the change prediction value and the product information (131) has not been set until the purchase recommendation interval has elapsed from the previous purchase-recommended date, the purchase recommendation processing unit (14) sets a day on which the purchase recommendation interval elapses, as the purchase-recommended date.

5. The shoe purchase recommendation device (10A,10B,10C,10D,10E,10F,10G) according to any one of claims 1 to 4, wherein, when the foot size was not measured on a measurement-recommended date set at a predetermined interval, on which measurement of the foot size is recommended, the screen display processing unit (16) creates the foot size change diagram (201) by replacing the foot size measurement value (111B) on the measurement-recommended date on which the foot size was not measured, with the change prediction value.

6. The shoe purchase recommendation device (10C,10D) according to any one of claims 1 to 5, wherein
the user data (111) includes a designated color (111E) designated by the user,
the product information (131) includes a shoe color (131D), and
the purchase recommendation processing unit (14) determines the purchase-recommended product by prioritizing the shoes of the shoe color (131D) matching the designated color (111E), from among the shoes fitting to the change prediction value.

7. The shoe purchase recommendation device (10B,10D) according to any one of claims 1 to 5, wherein
the user data (111) includes a designated genre (111D), which is a sports genre designated by the user,
the product information (131) includes an application genre (131C), which is a sports genre in which the shoes are used, and
the purchase recommendation processing unit (14) determines the purchase-recommended product by prioritizing the shoes of which the application genre (131C) matches the designated genre (111D) , from among the shoes fitting to the change prediction value.

8. The shoe purchase recommendation device (10D) according to any one of claims 1 to 5, wherein
the user data (111) includes a designated genre (111D), which is a sports genre designated by the user, and a designated color (111E) designated by the user,
the product information (131) includes an application genre (131C), which is a sports genre in which the shoes are used, and a shoe color (131D), and
the purchase recommendation processing unit (14) selects a purchase-recommended candidate collection by prioritizing the shoes of which the application genre (131C) matches the designated genre (111D), from among the shoes fitting to the change prediction value, and determines the purchase-recommended product by prioritizing the shoes of the shoe color (131D) matching the designated color (111E) from the purchase-recommended candidate collection.

9. The shoe purchase recommendation device (10C,10D) according to claim 6 or 8, wherein, when there are no shoes of the shoe color (131D) matching the designated color (111E), the purchase recommendation processing unit (14) determines the purchase-recommended product by prioritizing the shoes of a predetermined approximate color associated with the designated color (131E).

10. The shoe purchase recommendation device (10B,10D) according to claim 7 or 8, wherein, when there are no shoes for the application genre (131D) that matches the designated genre (111D), the purchase recommendation processing unit (14) determines the purchase-recommended product by prioritizing the shoes for a predetermined similar genre, which is a sports genre similar to the designated genre (111D).

11. The shoe purchase recommendation device (10E) according to any one of claims 1 to 5, wherein
the user data (111) includes a sporting ability measurement value (111F), which is a measurement result for sporting ability of the user,
the product information (131) includes information on a desired sporting ability value (131E) indicating the sporting ability coupled with each pair of shoes, and
the purchase recommendation processing unit (14) determines the purchase-recommended product by prioritizing the shoes of which the desired sporting ability value (131E) is equal to or less than the sporting ability measurement value (111F), from among the shoes fitting to the change prediction value.

12. The shoe purchase recommendation device (10G) according to any one of claims 1 to 11, wherein
the product information (131) includes stock information (131F) indicating whether or not the shoes are in stock, and
the purchase recommendation processing unit (14) determines the purchase-recommended product from among the shoes in stock.
